(19) Europäisches Patentamt
European Patent Office
Office européen des brevets

(11) **EP 4 628 205 A1**

(12) **EUROPEAN PATENT APPLICATION**

(43) Date of publication:
**08.10.2025 Bulletin 2025/41**

(21) Application number: **24168860.5**

(22) Date of filing: **05.04.2024**

(51) International Patent Classification (IPC):
*B01J 20/24* $^{(2006.01)}$    *B01J 20/28* $^{(2006.01)}$
*B01J 20/30* $^{(2006.01)}$    *B01J 20/32* $^{(2006.01)}$
*C09K 3/32* $^{(2006.01)}$

(52) Cooperative Patent Classification (CPC):
**B01J 20/28045; B01J 20/24; B01J 20/28011;
B01J 20/2805; B01J 20/28088; B01J 20/3007;
B01J 20/3078; B01J 20/3246; B01J 20/3282;
C09K 3/32**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **FibriTech sp. z o.o.
04-953 Warszawa (PL)**

(72) Inventors:
• **KULACHENKO, Artem
18670 Täby, Stockholm (SE)**
• **HOLOVIN, Andrii
01-505 Warsaw (PL)**
• **JEZAK, Monika
01-953 Warsaw (PL)**
• **BRZYSKI, Rafal
01-953 Warsaw (PL)**

(74) Representative: **Eisenführ Speiser
Patentanwälte Rechtsanwälte PartGmbB
Gollierstraße 4
80339 München (DE)**

(54)  **ABSORBER**

(57)    Absorber comprising a three-dimensional fibre network, the fibre network comprising cellulose fibres, wherein the fibre network shows a hierarchical pore structure comprising mesopores with a pore size > 50 $\mu$m, micropores with a pore size in the range of 2 to 50 $\mu$m and nanopores with a pore size of <100 nm together with a porosity in a range of 93 to 98 % and/or density in the range from 30 to 70 kg/m$^3$ .

Load Absorption Capacity as a Function of Density

Fig. 3

EP 4 628 205 A1

**Description**

Oil spills, both on land and water, can cause severe environmental damage. Effective oil absorption and recovery methods are critical for cleanup efforts. Many existing solutions utilize synthetic or fossil-based materials that are not biodegradable. Loose natural fibre absorbers, such as those described in EP3820957, offer an eco-friendly alternative to synthetic materials but have limitations in absorption capacity and selectivity. The random arrangement of fibres in loose form results in less efficient use of surface area and pore volume, reducing the overall oil absorption capacity. Moreover, loose natural fibres often lack the ability to selectively absorb oil while repelling water, which is crucial for effective oil spill cleanup, especially in marine environments.

According to a general aspect the invention provides an improved oil absorbent that is both high-performing and sustainable.

According to a first aspect, the invention relates to an absorber comprising a three-dimensional fibre network. The fibre network comprises cellulose fibres, wherein the fibre network shows a hierarchical pore structure comprising mesopores with a pore size > 50 $\mu$m, micropores with a pore size in the range of 2 to 50 $\mu$m and nanopores with a pore size of <100 nm. Additionally, the fibre network has a porosity in a range of 93 to 98 % and/or a density in the range of 30 to 70 kg/m$^3$.

The three-dimensional fibre network means, in this context, that at least parts of the fibres are bonded together to provide a self-sustainable structure. Thus, the absorber comprises a three-dimensional fibre network of cellulose fibres, which are at least partly bonded. Furthermore, the fibre network shows a predefined, essentially regular structure. In the hierarchical pore structure, the mesopores arise from interfibre connectivity, while the micropores are typical for fibre lumen and pits, and the nanopores <100 nm intrinsic to walls of cellulose fibres.

The invention includes the recognition that this three-dimensional configuration with the high porosity and/or low density and the hierarchical pore structure enhances the surface area and creates numerous oil retention reservoirs within the structure by leveraging hydrogen bonding and capillary action. This allows for rapid oil uptake as well as high absorption capacity exceeding loose cellulose fibres. The meso- and micropores facilitate rapid oil wicking and permeability. The abundant nanopores provide enormous surface area for absorption capacity. By providing an effective, scalable, and eco-friendly oil absorbent, this invention enables sustainable remediation of oil contamination events. The cellulose fibres of the absorber according to the invention are biodegradable and natural material, which allows for an eco-friendly disposal of the absorber and thus highly improves the environmental impact of the absorber.

The porosity can be determined, for example, through two methods. One method is the density-based method: The porosity is estimated based on the measured bulk density of the material and an assumed density for the cellulose fibres. The calculation is as follows:

Porosity(1 - $\rho$_bulk / $\rho$_fibre) $\times$ 100% where: $\rho$_bulk = measurement bulk density of the cellulose fibre network $\rho$_fibre = assumed density of the cellulose fibres 1500kg/m$^3$.

For example, if the measured bulk density is 50 kg/m$^3$, and assuming a cellulose fibre density of 1500 kg/m$^3$, the estimated porosity is: Porosity = (1 - 50 / 1500) $\times$ 100% = 96.7%

Another method follows the European Standard EN 13041:2011 "Soil improvers and growing media - Determination of physical properties - Dry bulk density, air volume, water volume, shrinkage value, and total pore space", which provides a standardized method for directly measuring the total pore space (porosity) of horticultural materials.

The key steps in this method are:

a. The dry bulk density of the material is determined by weighing a known volume of the dry sample.

b. The sample is then saturated with water, and the water volume is measured. This represents the total pore space, as all pores are filled with water.

c. The air volume is calculated by subtracting the water volume from the total volume of the sample.

d. The shrinkage value is determined by measuring the saturated sample's volume change after drying.

The total pore space (porosity) is then calculated as:

Porosity = (water volume + air volume) / total sample volume × 100%

This method directly measures the pore space without relying on assumptions about the material density. It provides a more accurate porosity determination and confirms the porosity range of 93-98% for the tested absorbers, consistent with estimation method described earlier.

To characterize the hierarchical pore structure of scanning electron microscopy (SEM), imaging at various magnifications is employed. The SEM analysis was performed using a Hitachi SU8200 microscope, operating at accelerating voltages of 5-10 kV and working distances of 8-23 mm, depending on the desired magnification and resolution. Samples were prepared by carefully sectioning the fibre network to expose the surface and internal structure. The samples were then mounted on aluminium stubs using carbon tape and sputter-coated with a thin layer of gold (approximately 10 nm) to improve conductivity and image quality. A series of images were acquired at magnifications ranging from 50x to 50,000x, covering length scales from millimetres to nanometers. This allows to visualize and assess the pore structure across three distinct size regimes:

Mesopores (>50 $\mu$m): Images at magnifications of 50-200x reveal the interconnected network of fibres, with large voids between the fibres representing the mesopores.

Micropores (2-50 $\mu$m): At magnifications of 500-2,000x, the lumen and pits within the individual fibres were clearly visible.

Nanopores (<100 nm): High-magnification images (10,000-50,000x) allow to observe the nanoscale pores within the cell walls of the cellulose fibres.

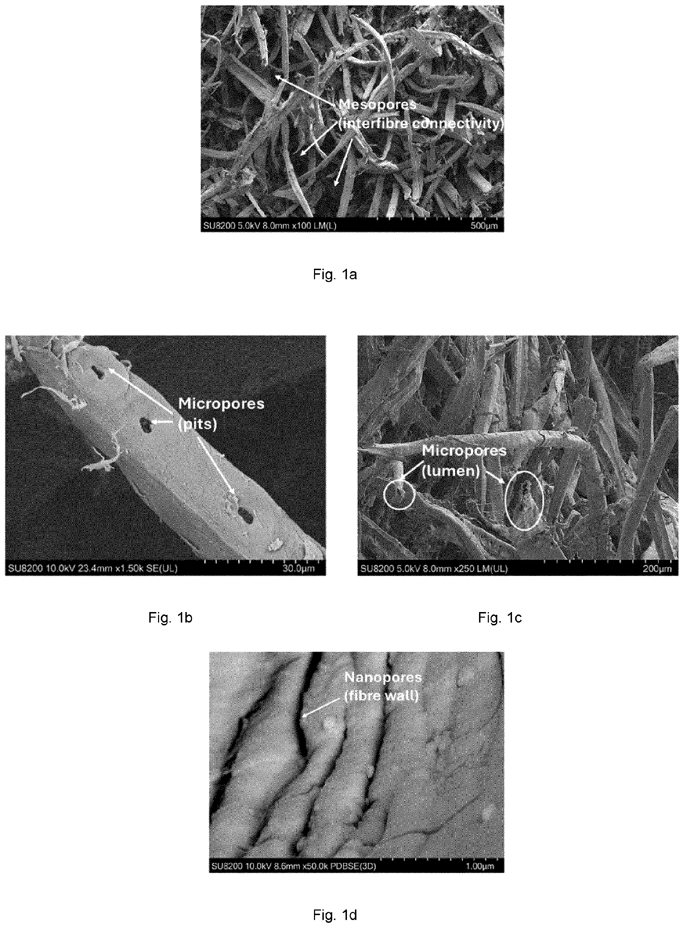

The porosity distribution is then estimated based on a qualitative assessment of the relative abundance and sizes of pores observed at each length scale. To ensure reproducibility and reliability, multiple samples are analysed, and the observations are consistent. The hierarchical pore structure of an example of an absorber is shown in Fig. 1a to 1d. Fig. 1a shows mesopores. Fig. 1b and 1c show micropores as pits and lumen. Fig. 1 shows nanopores in the cell walls.

To further elucidate the mesoporous structure of the fibre network, a 3D X-ray microscope based on micro-computed tomography (Micro-CT) using a SkyScan 1273 system is employed. The Micro-CT scans were conducted at resolutions of 34 $\mu$m and 7um, which is well-suited to image the spatial distribution and connectivity of mesopores greater than 50 $\mu$m.

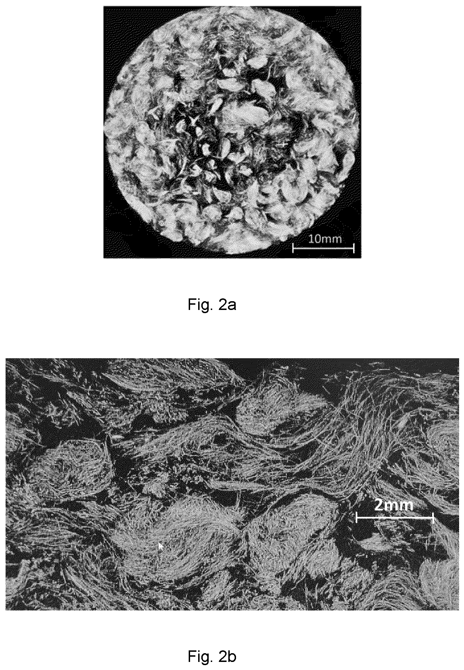

The microCT image reveals the complex network of void spaces within the material, as shown in Fig. 2a and 2b. These mesopores help enable the rapid uptake and retention of dense oils, which is attributable to the high absorption capacity of the absorber according to the invention. The interconnected mesoporous network visualized in the microCT slices indicates a hierarchical fibre network structure that can maintain physical integrity even when saturated with oil.

In one embodiment, the absorber comprises an essentially uniform fibre distribution over the fibre network. The essentially uniform fibre distribution enhances the absorption equally over the whole fibre network and thus promotes high absorption and absorption rates as well as improved stability during absorption.

Preferably, the fibre network has a dry compressive strength of at least 6.0 kPa/(kg/m$^3$) at 10% strain and/or compressive strength after oil absorption of at least 0.5 kPa/(kg/m$^3$) at 10% strain. Such relatively high strength enhances the stability of the absorber and supports high absorption rates.

Dry specific compressive stiffness of at least 6.0 kPa/(kg/m$^3$) and dry specific compressive strength of at least 0.50 kPa/(kg/m$^3$) at 10% strain for absorbers with a density of 30 kg/m$^3$ are measured on specimens with dimensions 50 $\times$ 50 $\times$ 23 mm using a Zwick Roell 10kN Pro Line testing machine, following ASTM D1621 for compressive properties of rigid cellular plastics and were performed at 50% relative humidity.

The specific compressive stiffness and strength do preferably not change significantly after oil absorption. Oil-saturated specific compressive stiffness of at least 7.0 kPa/(kg/m$^3$) and wet specific compressive strength of at least 0.60 kPa/(kg/m$^3$) at 10% strain after oil absorption for absorbers with a non-saturated, original density of 30 kg/m$^3$, is measured on oil-saturated specimens using a Zwick Roell 10kN Pro Line testing machine, following ASTM D1621 for compressive properties of rigid cellular plastics and were performed at 50% relative humidity. Furthermore, oil provides incremental resistance through its viscosity and does not degrade the mechanical integrity of the absorbers.

It is further preferred if the fibre network has a density in the range of 30-50 kg/m$^3$ for absorption of dense oils and a density in the range of 50-70 kg/m$^3$ for light oils. Lower densities are preferred to absorb dense oils to maintain structural integrity during absorption.

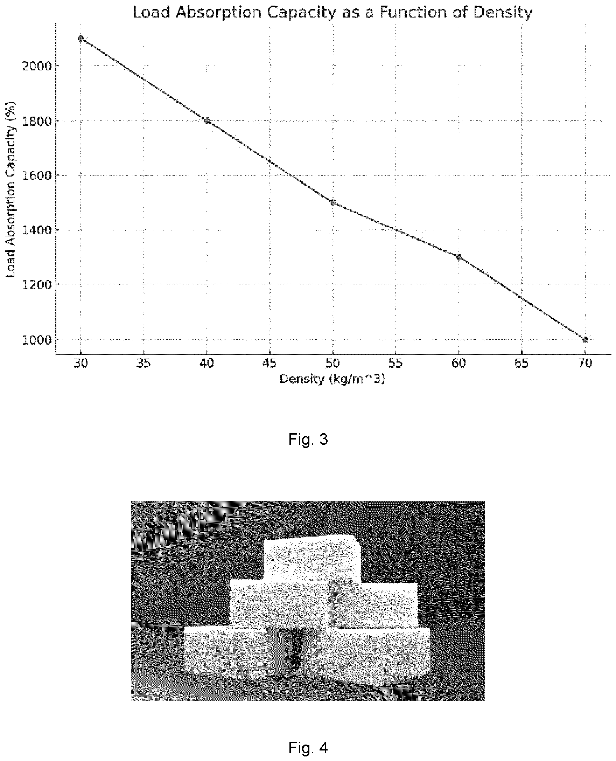

In one embodiment, the absorber has an oil absorption capacity of 1000% to 2100% of its own weight. The oil absorption capacity can depend on the fibre network density, for example, as follows: 1000% of its own weight at a density of 70 kg/m$^3$, 1300% of its own weight at a density of 60 kg/m$^3$; 1500% of its own weight at a density of 50 kg/m$^3$, 1800% of its own weight at a density of 40 kg/m$^3$ and 2100% of its own weight at a density of 30 kg/m^3. These oil absorption capacities represent typical values for each density level and may vary slightly depending on the specific testing conditions and oil properties. Following the ASTM F726-17 "Standard Test Method for Sorbent Performance of Adsorbents for Use on Crude Oil and Related Spills," the oil absorption capacity of the materials was determined under controlled conditions using semi-synthetic 10W40 oil. In Fig. 3, the load absorption capacity as a function of density in an embodiment of the absorber is shown.

In one embodiment, the three-dimensional fibre network has a rigid structure. Herein, preferably, parts of the cellulose fibres are bonded together via hydrogen bonding and/or Van-der-Waals bonding. The three-dimensional fibre network is preferably dimensionally stable after oil absorption.

Preferably the cellulose fibres are bonded together via hydrogen bonding and/or Van der Waals interactions, thereby providing dimensional stability to the three-dimensional fibre network after oil absorption. Alternatively, the three-dimensional fibre network is present in the form of fluff, and preferably, parts of the cellulose fibres are physically entangled and/or bonded via weak bonding via preferably van der Waals forces and/or Coulomb interactions. In all forms, the three-dimensional fibre network is based on the use of long and yet bulky fibres, which, in the embodiment of fluff, create the three-dimensional structure merely through entanglement and mechanical interlocking, for example, due to the presence of primary fines (fibre fines are generated during the pulping). This provides stability and a reservoir for the oil in the hierarchical pore structure. This embodiment achieves lower densities and much less dust than loose fibre fluff. Preferably, the cellulose fibres are physically entangled and/or weakly bonded via van der Waals forces and/or Coulomb interactions allowing for flexibility of the three-dimensional fibre network.

In a preferred embodiment of the absorber, at least parts of the surface of the fibres of the fibre network are hydrophobic. Hydrophobicity is essential for absorbing oil while repelling water to enable use for spills on water surfaces. In other words, it gives the possibility for selective absorption. While the absorber can absorb oil spills on land surfaces like streets or workshops also without hydrophobicity, possibly together with water or other liquids, hydrophobic surfaces are preferred to provide selectivity.

Preferably, 10 to 30 % of the total fibre surface area shows a hydrophobic coating. Coating approximately 10-30% of the total fibre surface area with hydrophobic material or layers provides an optimal balance of hydrophobicity for oil affinity while preserving enough exposed cellulose for oil absorption capacity. Less than 10% coating is insufficient for hydrophobicity, while over 30% does not bring any additional advantage.

Various modification techniques can be used to impart hydrophobicity and selective absorption properties to the cellulose fibres. Especially, the combination of the three-dimensional fibre network with a homogeneous distribution of hydrophobic moieties throughout the fibre network enhances absorption and selectivity. The type of hydrophobic coating can be selected depending on specific application requirements and performance criteria.

Parts of the surface of the cellulose fibres may be coated with a nanolayer of hydrophobic material, preferably with a nanolayer of hydrophobic alkyl chains, preferably via sizing. Parts of the cellulose fibres may be cross-linked with hydrophobic agents, for example with diisocyanates or epichlorohydrin. Hydrophobic polymers or functional groups may be covalently bonded on parts of the surface of the cellulose fibres. Polypentafluoropropylmethacrylate (PFMA) is bound on parts of the surface of the cellulose fibres. Fluoroalkyl-functional siloxane may be present on the surface, on parts of the surface of the cellulose fibres. Organofunctional silane coupling agents may be present on the surface on parts of the surface of the cellulose fibres. Hydrophobic bacterial cellulose aerogel may be present on the surface on parts of the surface of the cellulose fibres. Hydrophobic cellulose nanocrystals may be present on parts of the surface of the cellulose fibres.

In an embodiment, the fibre network builds granules or chips. This form combines the benefits of loose fibres and rigid blocks. Granules or chips can be easily transported, stored, or derived from solid forms that can be crushed and adapted to different shapes during application. This versatility allows customization based on the specific oil spill scenario, geometries, and customer preferences.

In an embodiment, the absorber is in the form of a block. Blocks are convenient for household use, having a presentable compact shape for relatively small spills. The block shape allows for efficient packing and storage while still offering a sufficient surface area-to-volume ratio for effective oil absorption. Blocks can be easily placed on or around the spill area, and their regular geometry facilitates the estimation of the required quantity for a given spill size. Such blocks are shown in Fig. 4.

In an embodiment, the absorber further comprises at least one fabric surrounding the fibre network. The at least one fabric is preferably a non-woven fabric, more preferred comprising polypropylene (PP), polylactic acid (PLA), polyhydroxyalkanoates or natural fibres or other biodegradable polymers. Examples of suitable natural fibres are cotton, jute, hemp. The fabric can serve as a cover for the fibre network. Preferably, at least one fabric is already used as a mould in the production process of the absorber.

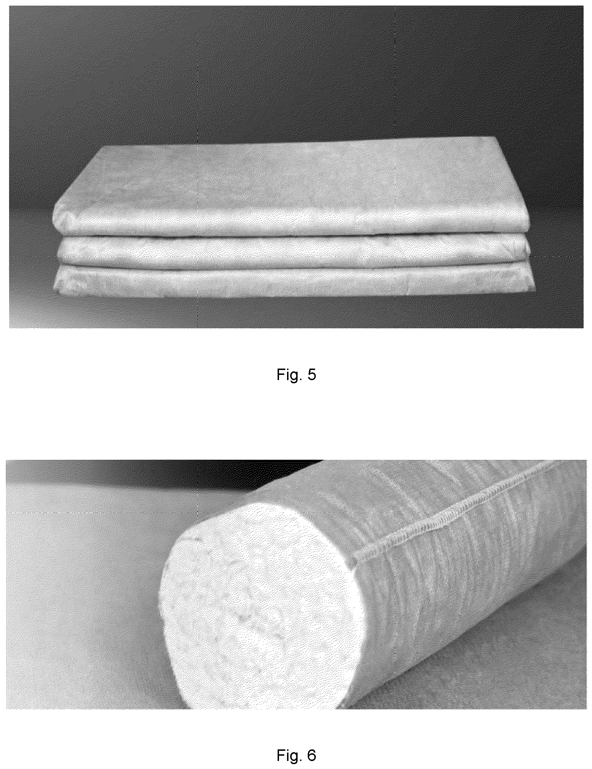

In an embodiment, the absorber has the form of a mat, preferably a mat with at least one fabric surrounding the fibre network. Mats are commonly used in industrial settings, particularly for covering larger areas prone to oil spills or leaks. Mats offer a high surface area to volume ratio, enabling rapid and extensive oil absorption. They can be easily laid out to cover and contain spills on floors, workbenches, or other flat surfaces. Mats are flexible and can be cut or folded to fit around equipment or conform to irregular spaces. Their flat profile allows for compact storage and easy transportation. Mats can also be used as a preventive measure, placed under machinery or in areas with a high risk of oil leaks to catch drips and prevent the spread of contamination. An example of a mat is shown in Fig. 5.

In a further embodiment the absorber can have the form of a sleeve, a vessel or a boom. In these forms, the fibre network is encased in an elongated tubular sleeve, typically made from a permeable fabric or mesh. Sleeves or booms are designed to contain and absorb oil spills on water surfaces, such as in marine or freshwater environments. The cylindrical shape allows the boom to float on the water surface, while the permeable outer layer allows oil to penetrate and be absorbed by the fibre network inside. Booms can be connected end-to-end to create a longer barrier for containing larger spills or protecting shorelines. They are also suitable for confinements where spills occur repeatedly, acting as an absorbing media for prolonged periods without frequent replacements. The vessel-like design of the sleeves or booms provides a high capacity for oil retention, allowing them to absorb and hold significant volumes of oil before reaching saturation. This feature is particularly advantageous when continuous oil leakage is expected, such as around faulty machinery or in high-risk areas. An example of a boom is shown in Fig. 6.

In a further embodiment, the fibre network can be provided in fluff forms or processed into small granules or chips. These versatile forms can be easily dispensed and spread over affected areas, conforming to surface shapes and contours. They are particularly useful for treating spills in hard-to-reach spaces, such as crevices, corners, or around complex machinery. The high surface area of fluff and the small particle size of granules enable rapid and thorough oil absorption from various surfaces, including hard floors, soil, or gravel. These forms can also be used as packing materials for absorbing oil within containers or as filtration media for oily liquids or air. After use, the oil-saturated fluff, fibres, granules, or chips can be easily collected using scoops, shovels, vacuums, or other standard equipment and disposed of according to local regulations.

According to a second aspect, the invention relates to a method for the preparation of an absorber comprising a three-dimensional fibre network, the method comprising the following steps:

a. foaming cellulose fibres in an aqueous solution to obtain a foamed aqueous solution;

b. providing the foamed aqueous solution obtained in step a) into a cavity of an oven;

c. forming a three-dimensional fibre network product by providing electromagnetic energy to the foamed aqueous solution obtained in step a),

wherein the foamed aqueous solution has a density in the range of 350 to 495 kg/m$^3$, preferably 400-450 kg/m$^3$ and is preferably structurally stable and uniform.

The invention is further based on the recognition that the desired favorable properties of the fibre network, which results in the good performance of the absorber can be achieved especially via the described method. The desired pore structure is, in particular, achieved via a combination of the initial foam density and structure together with the later forming via electromagnetic energy. The invention further includes the recognition that especially hydrogen and van der Waals bonding between cellulose fibres can be enhanced by controlling the drying rate and temperature curves with the described method. The application of electromagnetic energy creates favourable internal pressures during moisture removal to bring fibres into closer contact and maximize fibre-fibre interfaces throughout the 3D structure.

Preferably, the foam should be stable and uniform, reflected in the final structure. Stability means, in this context especially, that the foam withstands water drainage and does not collapse during rapid dewatering during the application of electromagnetic energy.

Also, in the foamed aqueous solution, a hierarchical pore structure is present. The foamed aqueous solution has a density in the range of 350 to 495 kg/m$^3$, preferably 400-450 kg/m3, which is higher than the final absorber density due to the presence of water, and wherein the water evaporates during the forming process, resulting in the lower density of the final absorber according to the first aspect of the invention. Foaming the cellulose fibres is performed in aqueous solution. The parameters of the foam, particularly the degree of foaming, can have a significant effect on the internal structure of the final fibre network. Foam is a good dispersing medium for fibres in the three-dimensional network, and any suitable method of foaming known in the prior art can be used according to the present invention. The size of the foam bubbles determines the distribution of fibres in the three-dimensional space. Therefore, controlling the bubbles allows for obtaining a controlled density in the fibre network product prepared by the method of the present invention.

A preferred bubble size range is between 50 $\mu$m and 500 $\mu$m. Bubbles smaller than 50 $\mu$m may lead to an excessively dense structure with reduced porosity, which could limit oil absorption capacity. On the other hand, bubbles larger than 500 $\mu$m may result in a structure that is too open, compromising the mechanical stability and integrity of the fibre network.

To achieve the desired bubble size distribution, the foaming process can be controlled by adjusting various parameters such as the concentration of foaming agents, the intensity and duration of mixing, and the temperature of the solution. High-shear mixing can be employed to generate smaller bubbles, while gentle mixing can be used to maintain larger bubble sizes.

In addition to the preferred bubble size, uniformity of the bubble distribution is also preferred. Homogeneous distribution of bubbles ensures a consistent density and structure throughout the fibre network product. This can be achieved by carefully controlling the mixing conditions and ensuring that the foaming agents are evenly dispersed in the solution.

In one embodiment, foaming cellulose fibres in an aqueous solution is performed by introducing a gas into the pulp. The size and homogeneity of the foam bubbles are influenced by the different phases of the forming process. The stage of preparing the batch of material gives the possibility of shaping the character of the foam by adding some additives to the mass: blowing agents increase the amount of gas filling the bubbles, and surfactants control the foam's susceptibility to foaming. The appropriate selection of foam stabilizers allows the foam to maintain the desired properties until the fibres stiffen and take over the role of a supporting skeleton a structure that has so far been held by vanishing bubbles. In one embodiment, an aqueous solution used for foaming cellulose fibres comprises at least one biodegradable non-fibrous additive comprising a foam stabilizer, foaming agent, biodegradable blowing agent or combination thereof.

Biodegradable foam stabilizers in the form of polysaccharides can be used with the method of the present invention. In particular, xantan or guar gum and/or agar are preferable biodegradable foam stabilizers. The main goal of foam stabilizers is to extend the life of wet foam and to support the mechanical stability of the final product. Biodegradable foaming agents meeting environmental standards can be used with the method of the present invention. In particular, coco glucoside and Sodium laureth sulfate are preferred foaming agents.

Biodegradable blowing agents introduced into the water solution can also be used as an aid in the formation of foam. The preferred blowing agents are sodium carbonate and sodium bicarbonate, which have minimal impact on the environment. In another embodiment, an aqueous solution used for foaming cellulose fibres further comprises at least one further additive for controlling biomechanical properties of the obtained fibre network product, wherein said further additive comprises a polysaccharide, polysaccharide derivative, lignin, lignin derivative, cellulose, and a cellulose derivative. Other non-fibrous additives can be used with the method of the present invention to define the end parameters of the material. Some of the additives have a double role: they are material stabilizers and foam enhancers. Preferably, biomaterials that are at least partially dissolvable in water are used. Preferred non-fibrous additives are agar and chitosan, polysaccharides that help with moisture control and stiffness of the product. Agar gel acts as a foam stabilizer that extends the life of wet foam, and after electromagnetic forming, it acts as a glueing agent, improving the strength of bonds between fibres.

Biodegradable foam stabilizers (e.g., xanthan gum, agar gum, Arbocell, Polyquaternium-10), foaming agents (coco glucoside), and blowing agents (sodium carbonate, sodium bicarbonate) are preferred for the production of rigid structures that originate from foam. These additives help create and stabilize the foam, which is beneficial for achieving the desired porous structure in the rigid form.

Hydrophilic additives (e.g., chitosan) can be added for agricultural uses of the product obtained by the method according to the present invention, for maintaining moisture for a prolonged time. Biological additives (e.g., grapefruit extract) can be used for extension of the material lifecycle. Water-insoluble, hydrophobic additives (e.g. mineral powders) can be added to create solutions for construction applications for water repellence.

In one embodiment, polysaccharides are used as a foam additive to increase the durability of the fibre network product after the forming process. The suitable polysaccharides comprise agarose, chitosan and combination thereof. Agarose mechanically stabilizes the material after forming, by strengthening the bonds between the fibres and securing their surface mechanically.

Chitosan, in addition to performing the function of mechanical strengthening, is known for its biocidal properties, protects the material against excessive biological aging. In another embodiment, starch is also used as a foam additive, which increases the stiffness of the material after the moulding process. Starch is a potential additive, that has an impact on mechanical properties of the final material. It makes the outer layer more rigid and brittle.

In one embodiment lignin is used as an additive. Lignin may be introduced to increase mechanical strength and water resistance of the final product. Furthermore, in the present invention, chemical and mechanical derivatives of cellulose can be used as mechanical stabilizers or modifiers of the fibre surface. Examples include cellulose ethers, for example, methyl cellulose and ethyl cellulose, known for their use as industrial rheology modifiers. They can be used as foam stabilizing agents and modifiers of interactions between the fibre network product and solvents, either polar or nonpolar. Other cellulose derivatives, including hydroxypropylmethylcellulose and cellulose nanofibrils, are suitable additives using the method according to the present invention.

Preferably, the cellulose fibres in step a) have a length-weighted average fibre length (Lw) in the range of 0.6 to 1.5 mm, preferably 0.8-1.3 mm or in the range of 2 to 3.5 mm, preferably 2.3 to 3 mm. A length-weighted average fibre length of 0.8-1.3 mm is preferred for the production of absorbers with a rigid structure. For fluff embodiments, fibres with a higher Lw, typically in the range of 2.3-3 mm, are preferred to provide better entanglement and mechanical stability while maintaining high porosity.

The length-weighted average fibre length is determined via FibreLab fibre analyser. This measure gives more weight to the longer fibres in the distribution. The FibreLab fibre analyser uses polarized light microscopy and image analysis to measure individual fibre lengths and widths in a pulp sample.

Preferably, in step c) a first type electromagnetic energy and a second type electromagnetic energy different from the first type electromagnetic energy are applied subsequently to the same cellulose fibres. It is further preferred if the first type of electromagnetic energy is radio wave or microwave electromagnetic radiation and the second type of electromagnetic energy is a radio frequency (RF) alternating electromagnetic field. This combination allows especially for maximum efficiency and productivity during the final phase of drying, when the water must be removed from the fibres. The structure is merely formed when the first type is applied and stays practically intact through RF drying with only some degree of shrinkage. The combination of microwave and radio frequency allows further preserving the pore structure control by manipulating electromagnetic field patterns and heating uniformity.

Preferably, the first type electromagnetic energy is configured to warm up of the material and force part of water out to go into drain, and the second type electromagnetic energy is configured to obtain substantially uniform fibrous bonded structures by drying fully down to 0% moisture content. It is further preferred if the second type electromagnetic energy is applied until the material is dried down to 0% moisture content and/or wherein the first type electromagnetic energy is applied not longer than until a local temperature of at least some part of the material exceeds a predefined threshold.

In an embodiment, the cavity is at least partly limited by a mould comprising a plurality of pores each having a pore size of 0.8 to 1.5 mm. This range allows the fibres to remain within the mould and not to leak, while at the same time the pores are large enough to avoid substantial clogging of the pores. The pores of the mould are small enough that evaporated liquid within the mould results in a pressure build-up within the mould by the application of the electromagnetic energy. The aqueous solution is preferentially heated within the mould until steam is formed, which causes pressure build-up. The liquid and steam evacuate through the pores of the mould, thereby shaping the cellulose fibres into their three-dimensional fibre network and drying the solution. Mould permeability is preferably selected to allow drainage under volumetric steam pressure while maintaining the pressure to ensure efficient bonding.

While also other shapes of pores are feasible, it has been shown that the optimum shape of the pores is round.

Preferably, the cavity is at least partly limited by a mould comprising at least one fabric, the at least one fabric being preferably a non-woven fabric, more preferred comprising fibre network can be made from various materials, including woven and non-woven fabrics. These fabrics can be biodegradable or non-biodegradable, depending on the desired environmental impact and lifecycle of the product.

In addition to polypropylene (PP) nonwoven fabric, other materials such as biodegradable polymers (e.g., polylactic acid, polyhydroxyalkanoates), natural fibres (e.g., cotton, jute, hemp) can be used as mould. These materials can impart additional functionality to the cellulose fibre network, such as enhanced biodegradability, improved durability, or specific surface properties.

Preferably, at the least one fabric has a porosity in the range of 50-80%, preferably 60-75% or in the range of 20-50%, preferably 30-40% and/or wherein the fabric pore size is smaller than 1.5 mm. The porosity of the fabric can be adjusted to control the permeability and structural properties of the final cellulose fibre network. For example, a highly porous fabric mould can be used to create a more open and permeable structure, while a less porous fabric can result in a denser and more compact matrix.

Preferably, the at least one fabric is a non-woven fabric selected from the group consisting of polypropylene (PP) spun-bond, polypropylene (PP) SMS (spunbond-meltblown-spunbond), polybutylene adipate terephthalate (PBAT), and filter paper, with a grammage ranging from 20 to 80 $g/m^2$, preferably 30 to 50 $g/m^2$.

It is further preferred if the at least one fabric is not removed after step c). Thus, the fabric can also be used to surround the final fibre network and shape the absorber. This is especially helpful if the fibre network is in fluff form.

In an embodiment, the mould is made of dielectric material, having a softening point above 100°C.

Preferably, a surface share of the pores of the mould with regard to the surface encapsulating the volume within the mould is small such that internal pressure can build up, whereas for an internal mould volume of up to 1 litre, the surface share of the pores is between 4% and 12%. It is further preferred if for a volume is between 1 litre and 10 litres, the surface share of the pores is between 0.5% and 40%, preferably between 2% and 20% and most preferably between 6% and 14%, and for a volume between 10 litres and 100 litres the surface share of the pores is between 1% and 60%, preferably between 4% and 40% and most preferably between 10% and 30%.

In an embodiment, a share of a total pore area in relation to an internal mould volume is between 0.05 and 0.15 $cm^{-1}$, preferably is between 0.05 and 0.1 $cm^{-1}$, most preferably is 0.1 $cm^{-1}$.

In a preferred embodiment, the method comprises at least one hydrophobization step, preferably after step c), after which at least parts of the surface of the fibres of the fibre network are hydrophob. Together with the favorable structure, the hydrophobization step further improves the absorber and provides enhanced selectivity.

While various modification techniques are employed to impart hydrophobicity and selective absorption properties to the cellulose fibres, especially the combination of the fibrous porous structure and the in-situ hydrophobization process create a superior oil absorption reservoir in one-step process streamlining the manufacturing procedure and ensures a homogeneous distribution of the hydrophobic moieties throughout the fibre matrix.

Preferably the at least one hydrophobization step comprises sizing of the fibre network, preferably with alkyl ketene dimer (AKD), wax emulsions, silanes, or stearates as sizing agents, cross-linking parts of the cellulose fibres with hydrophobic agents, grafting of hydrophobic moieties onto the cellulose fibres, preferably through free-radical polymerization, ring-opening polymerization or click chemistry, vapor-phase-assisted photopolymerization modifying the fibre network with fluoroalkyl-functional siloxane, using a trimethylsilylation reaction to modify the cellulose fibres of bacterial cellulose aerogel (BCA), applying organofunctional silane coupling agents on the cellulose fibres or applying thiol-containing castor oil and dopamine to the fibre network.

One possible hydrophobization step is sizing, where hydrophobic coatings are deposited onto the fibre matrices. Sizing agents, such as alkyl ketene dimer (AKD), can be used to hydrophobize the fibres by forming covalent or with the cellulose hydroxyl groups on the fibre surface. This results in the deposition of a nanolayer of hydrophobic alkyl chains, which can be tuned by adjusting the carbon chain length and application level of the sizing agent. The sizing process can involve suspending the sizing agent in an appropriate carrier to improve the dispersion and applying the solution to the structured fibre network through mixing or spraying after initial drying. While AKD is a commonly used sizing agent, the use of other hydrophobic cellulose-reactive agents is also possible, including but not limited to wax emulsions, silanes, and stearates. These alternative sizing agents can provide similar selective liquid permeability effects, with the amount of deposited layer preferably tuneable from 1-10% weight gain.

Also, other surface modification techniques can be employed to achieve selective absorption. For example, the cellulose fibres can be cross-linked with hydrophobic agents, such as diisocyanates or epichlorohydrin, to create a water-repellent surface while maintaining oil absorption capacity. The cross-linking process involves the formation of covalent bonds between the cellulose fibres and the cross-linking agent, resulting in a more stable and durable hydrophobic surface.

Another hydrophobization step may be the grafting of hydrophobic moieties onto the cellulose fibres. This can be achieved through various grafting techniques, such as free-radical polymerization, ring-opening polymerization, or click chemistry. By covalently attaching hydrophobic polymers or functional groups to the cellulose surface, the fibres can acquire selective absorption properties. For instance, grafting with polymeric epoxidized soybean oil has been shown to enhance the hydrophobic properties of cellulose fibres, achieving a water contact angle of 145.1°.

Vapor-phase-assisted photopolymerization is another technique that can be utilized to create a hydrophobic surface on cellulose fibres without altering their morphology. This method has been demonstrated to achieve water repellence with a controlled static contact angle >130°.

A further hydrophobization step may be the creation of super-hydrophobic, oleophobic, and self-cleaning properties on the cellulose fibres. This can be achieved by modifying the fibres with fluoroalkyl-functional siloxane, resulting in a lotus effect on the surface and significantly enhancing repellence before and after washing.

Hydrophobic modification of bacterial cellulose aerogels is another hydrophobization step that can be employed. By using a trimethylsilylation reaction to modify the cellulose nanofibres of bacterial cellulose aerogel (BCA), hydrophobic bacterial cellulose aerogels with excellent selectivity for oil adsorption from water can be obtained.

Organofunctional silane coupling agents can also be used for the surface modification of cellulosic fibres, leading to enhanced hydrophobicity and potential for covalent bonding with polymer matrices in composites. A further hydrophobization step using thiol-containing castor oil and dopamine can be implemented to generate hydrophobic cellulose nanocrystals. This method has been shown to result in a material with a water contact angle of 95.6°, showcasing a rapid development of hydrophobic bio-based nanomaterials.

An advantage of this method according to the invention, lies in the ability to leverage various surface modification techniques to achieve selective permeability rather than relying on one specific formulation. The process is designed to accept multiple chemical treatments for surface property modification after establishing the core fibrous architecture. This allows for the customization of the cellulose fibre-based 3D matrix to suit specific application requirements and performance criteria.

By employing different surface modification techniques, the invention enables the creation of a highly effective and environmentally friendly oil-absorbent material. The selective absorption properties, combined with the high absorption capacity and rapid uptake kinetics of the 3D matrix, make the resulting absorber a superior solution for oil spill remediation and other oil-water separation applications.

In one embodiment of the method, a power density of electromagnetic energy provided to the foamed natural organic fibres in step c) is of 1 to 25 kW per kg of the foamed aqueous solution obtained in step a), most preferably of 2 to 10 kW per kg of the foamed aqueous solution obtained in step a).

In an embodiment of the method, the method comprises a further processing step, in which the fibre network is brought into the form of granules, chips or the like.

According to a third aspect, the invention relates to an absorber produced according to the method of according to the second aspect of the invention.

As to the advantages, preferred embodiments and details of the method and the absorber produced according to the method reference is made to the corresponding aspects and embodiments described herein above with respect to the absorber.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

Examples are described in more detail below with reference to the appended drawings.

Fig. 7 is a schematic drawing of a method according to an example of the second aspect of the invention.

Fig. 8a to 8d show different examples of absorbers according to the first aspect of the invention in comparison with an absorber according to the state of the art.

Fig. 9 shows an example of an absorber according to the first aspect of the invention before and after oil absorption.

Fig. 10 shows an example of an absorber according to the first aspect of the invention after oil absorption.

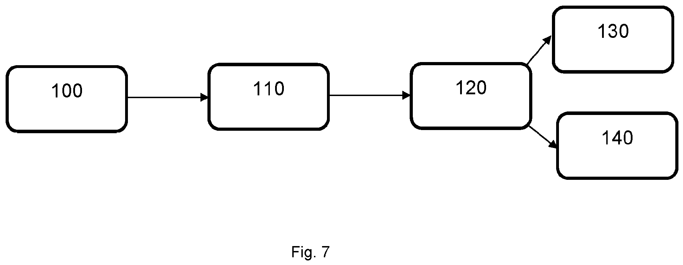

Fig. 7 is a schematic drawing of a method according to an example of the second aspect of the invention. The method for the preparation of an absorber comprising a three-dimensional fibre network, comprises in a first step 100 foaming cellulose fibres in an aqueous solution to obtain a foamed aqueous solution, the foamed aqueous solution has a density in the range of 400-450 kg/m$^3$. The foamed aqueous solution is structurally stable and shows a hierarchical pore structure. In a second step 110 the foamed aqueous solution obtained in the first step 100 is provided into a cavity of an oven. The following step 120 a three-dimensional fibre network product is formed by providing electromagnetic energy to the foamed aqueous solution obtained in the first step. In a preferred embodiment in the third step 120 a first type electromagnetic energy and a second type electromagnetic energy different from the first type electromagnetic energy are applied subsequently to the same cellulose fibres, wherein the first type of electromagnetic energy is radio wave or microwave electromagnetic radiation and the second type of electromagnetic energy is a radio frequency (RF) alternating electromagnetic field. Optionally in step 110 the foamed aqueous solution was provided into the oven in mould. If that is the case, in optional step 130 the fibre network can be unpacked from the mould. Alternatively, especially when a non-woven fabric is used as the mould, the fibre network can also stay in this mould and the mould can thus be also part of the final absorber and surround the fibre network. In a further optional step 140, the fibre network can be formed into granules or chips, e.g. by breaking.

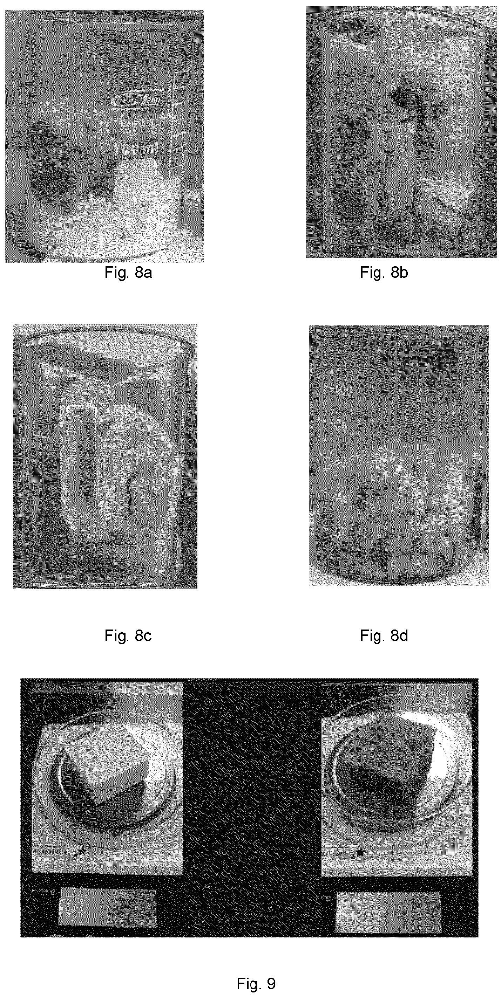

Fig. 8a to 8d show different examples of absorbers according to the first aspect of the invention in comparison with an absorber according to the state of the art.

In Fig. 8a, an example of an absorber in the form of fluff, according to the invention, is shown after the absorption of oil. In Fig. 8b, an example of an absorber according to the invention in form of chips is shown after absorption of the same amount of oil as in Fig. 8a. Fig. 8c shows a further example of an absorber according to the invention in form of a block with also the same amount of oil as in Fig. 8a and 8b. As can be seen, these three examples were able to absorb the oil in a greater amount than the absorber of the state of the art, which is shown in Fig. 8d. With the same amount of oil present, a significant portion remains unabsorbed by the state-of-the-art absorber. This difference in performance can be attributed to the unique structural properties of the absorber according to the invention, which exhibits high porosity, low density, and a hierarchical pore structure. In contrast, the state-of-the-art absorber made from renewable, natural, and biodegradable materials lacks these advantageous structural characteristics, resulting in lower oil absorption efficiency.

Fig. 9 shows an example of an absorber according to the first aspect of the invention before and after oil absorption. Here it is clearly shown that the low-density absorber with only a weight of 2.64 g is able to absorb 36.75 g oil and thus more than 1300 % of its own weight.

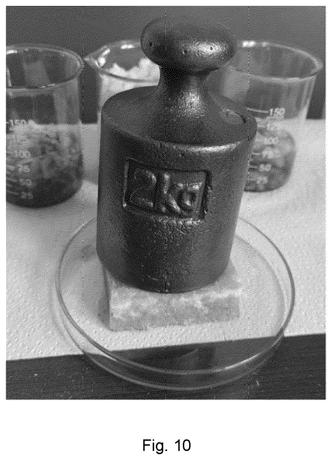

Fig. 10 shows an example of an absorber according to the first aspect of the invention after oil absorption. Herein a further example of an absorber in form of a block is shown after absorption similar to the one Fig. 9. As can be seen even after placing a weight of 2 kg on the block, the block is structurally stable also after significant absorption of oil. Here the 5 g block has absorbed 50 g 10W40 oil.

Example 1.

The product was prepared according to the following steps:

- Chemi-Thermo Mechanical Pulp of cellulose with an average length of 1,7mm was suspended in water to achieve a concentration of 10,8%, and fibres were allowed for swelling overnight.

- As a wet strength agent, 21% of water solution of polyamidoamine epichlorohydrin resin FennoStrenght PA sizing agent.

- As a hydrophilization agent, the alkyl-ketene dimer (AKD) suspension with 20% of AKD solid content was used.

- A 13% solution of coco glucoside and a 10% solution of Sodium Lauryl Ether Sulfate were used as foaming agents.

- 550 g of 10.8% CTMP pulp, 2.2g of polyamidoamine epichlorohydrin resin solution, 4.4 g of AKD suspension, and 160 ml of water were mixed using a uniform distribution of ingredients using a high-speed mixer.

- 1,5 ml of each foaming agent was added to the mixture and foamed to achieve a foam density of 400 -450 kg/m3.

- For blocks, 130 g of foam was placed in the PEEK cubic mold, which had $100 \times 100 \times 25$ mm dimensions. Ventilation holes were uniformly distributed on the entire surface, with an open area ratio of 14.8%. Foam in mold was placed at 1850 W for 3 minutes. For sleeves, 500g of foam was placed in the PP 30cm long non-woven PP fabric and 1850 W for 9 min.

- Finished product weight 12.0 g.

## Claims

1. Absorber comprising a three-dimensional fibre network, the fibre network comprising cellulose fibres, wherein the fibre network shows a hierarchical pore structure comprising mesopores with a pore size > 50 $\mu$m, micropores with a pore size in the range of 2 to 50 $\mu$m and nanopores with a pore size of <100 nm together with a porosity in a range of 93 to 98 % and/or density in the range from 30 to 70 kg/m$^3$ .

2. Absorber according to claim 1 with an essentially uniform fibre distribution over the fibre network and/or wherein the fibre network has a dry compressive strength of at least 6.0 kPa/(kg/m$^3$) at 10% strain and/or compressive strength after oil absorption of at least 0.5 kPa/(kg/m$^3$) at 10% strain.

3. Absorber according to one of the preceding claims, wherein the fibre network has a density in the range of 30-50 kg/m$^3$ for absorption of dense oils and a density in the range of 50-70 kg/m$^3$ for light oils and/or wherein the fibre network has an oil absorption capacity of 1000% to 2100% of its own weight.

4. Absorber, according to one of the preceding claims, wherein parts of the cellulose fibres are bonded together via hydrogen bonding and/or Van-der-Waals bonding and/or wherein the three-dimensional fibre network is dimensionally stable after oil absorption and/or wherein parts of the cellulose fibres are physically entangled and/or bond via weak bonding via preferably van der Waals forces and/or Coulomb interactions.

5. Absorber according to one of the preceding claims, wherein at least parts of the surface of the fibres of the fibre network are hydrophobic, wherein preferably 10 to 30 % of a total fibre surface area shows a hydrophobic coating.

6. Absorber according to claim 5, wherein parts of the surface of the cellulose fibres are coated with a nanolayer of hydrophobic material, preferably with a nanolayer of hydrophobic alkyl chains, preferably via sizing

    and/or wherein parts of the cellulose fibres are cross-linked with hydrophobic agents, for example with diisocyanates or epichlorohydrin
    and/or wherein hydrophobic polymers or functional groups are covalently bonded on parts of the surface of the cellulose fibres
    and/or wherein polypentafluoropropylmethacrylate (PFMA) is bound on parts of the surface of the cellulose fibres
    and/or wherein fluoroalkyl-functional siloxane is present on the surface or parts of the surface of the cellulose fibres
    and/or wherein organofunctional silane coupling agents are present on the surface on parts of the surface of the cellulose fibres
    and/or wherein a hydrophobic bacterial cellulose aerogel is present on the surface or parts of the surface of the cellulose fibres
    and/or wherein hydrophobic cellulose nanocrystals are present on parts of the surface of the cellulose fibres.

7. Absorber according to one of the previous claims, wherein the fibre network builds granules or chips.

8. Absorber according to one of the previous claims, further comprising at least one fabric surrounding the fibre network, wherein the at least one fabric is preferably a nonwoven fabric, more preferred comprising polypropylene (PP) polylactic acid (PLA), polyhydroxyalkanoates or natural fibres.

9.  A method for the preparation of an absorber comprising a three-dimensional fibre network, the method comprising the following steps:

    a. foaming cellulose fibres in an aqueous solution to obtain a foamed aqueous solution;
    b. providing the foamed aqueous solution obtained in step a) into a cavity of an oven;
    c. forming a three-dimensional fibre network product by providing electromagnetic energy to the foamed aqueous solution obtained in step a),

    wherein the foamed aqueous solution has a density in the range of 350 to 495 kg/m$^3$ , preferably 400-450 kg/m$^{3,}$ and is preferably structurally stable and uniform.

10. The method according to claim 9, wherein in step c) a first type electromagnetic energy and a second type electromagnetic energy different from the first type electromagnetic energy are applied subsequently to the same cellulose fibres, wherein preferably the first type of electromagnetic energy is radio wave or microwave electromagnetic radiation, and the second type of electromagnetic energy is a radio frequency (RF) alternating electromagnetic field.

11. The method according to claim 10, wherein the first type of electromagnetic energy is configured to warm up the material and force part of water out to go into the drain, and wherein the second type of electromagnetic energy is configured to obtain substantially uniform fibrous bonded structures by drying fully down to 0% moisture conten and/or wherein the second type of electromagnetic energy is applied until the material is dried down to 0% moisture content and/or wherein the first type of electromagnetic energy is applied not longer than until a local temperature of at least some part of the material exceeds a predefined threshold.

12. The method according to any of claims 9 to 11, wherein the cavity is at least partly limited by a mould comprising a plurality of pores, each having a pore size of 0.8 to 1.5 mm and/or wherein the cavity is at least partly limited by a mould comprising at least one fabric, the at least one fabric being preferably a non-woven fabric, more preferred comprising polypropylene (PP), polyhydroxyalkanoates or natural fibres, wherein preferably the at least one fabric is a non-woven fabric selected from the group consisting of polypropylene (PP) spun-bond, polypropylene (PP) SMS (spunbond-meltblown-spunbond), polybutylene adipate terephthalate (PBAT), and filter paper, with a grammage ranging from 20 to 80 g/m$^2$, preferably 30 to 50 g/m$^2$.

13. The method according to claim 12, wherein the at least one fabric is not removed after step c).

14. The method according to claim 13 comprising at least one hydrophobization step, preferably after step c), after which at least parts of the surface of the fibres of the fibre network are hydrophobic, wherein preferably at least one hydrophobization step comprises sizing of the fibre network, preferably with alkyl ketene dimer (AKD), wax emulsions, silanes, or stearates as sizing agent,

    cross-linking parts of the cellulose fibres with hydrophobic agents,
    grafting of hydrophobic moieties onto the cellulose fibres, preferably through free-radical polymerization, ring-opening polymerization or click chemistry,
    vapor-phase-assisted photopolymerization
    modifying the fibre network with fluoroalkyl-functional siloxane
    using a trimethylsilylation reaction to modify the cellulose fibres of bacterial cellulose aerogel (BCA),
    applying organofunctional silane coupling agents on the cellulose fibres or
    applying thiol-containing castor oil and dopamine to the fibre network.

15. Absorber produced according to the method of any of claims 9 to 14.

Fig. 1a

Fig. 1b

Fig. 1c

Fig. 1d

Fig. 2a

Fig. 2b

Fig. 3

Fig. 4

Fig. 5

Fig. 6

Fig. 7

Fig. 8a

Fig. 8b

Fig. 8c

Fig. 8d

Fig. 9

Fig. 10

**EUROPEAN SEARCH REPORT**

Application Number

EP 24 16 8860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/324167 A1 (SLATTEGARD RIKARD [SE]) 21 October 2021 (2021-10-21) * examples 1-5; tables 1-4 * | 1-6,9,15 | INV. B01J20/24 B01J20/28 B01J20/30 B01J20/32 C09K3/32 |
| X | COLSON JÉRÔME ET AL: "Oil-absorbing porous cellulosic material from sized wood pulp fines", HOLZFORSCHUNG: INTERNATIONAL JOURNAL OF THE BIOLOGY, CHEMISTRY, PHYSICS AND TECHNOLOGY OF WOOD, vol. 73, no. 1, 17 October 2018 (2018-10-17), pages 83-92, XP093207930, DE ISSN: 0018-3830, DOI: 10.1515/hf-2018-0093 * abstract * * section: "Materials and methods"; page 84 - page 85 * * figure 4 * | 1-6 | |
| A | TEJADO ALVARO ET AL: "Superhydrophobic foam-like cellulose made of hydrophobized cellulose fibres", CELLULOSE, vol. 21, 22 March 2014 (2014-03-22), pages 1735-1743, XP093207561, Netherlands ISSN: 0969-0239, DOI: 10.1007/s10570-014-0247-x Retrieved from the Internet: URL:https://link.springer.com/content/pdf/10.1007/s10570-014-0247-x.pdf> * the whole document * | 1-15 | TECHNICAL FIELDS SEARCHED (IPC) B01J F16D C09K |
| A | EP 4 036 306 A1 (ORGANIC DISPOSABLES SP Z O O [PL]) 3 August 2022 (2022-08-03) * the whole document * | 1-15 | |

The present search report has been drawn up for all claims

| Place of search | Date of completion of the search | Examiner |
|---|---|---|
| The Hague | 24 September 2024 | Klemps, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8860

This annex lists the patent family members relating to the patent documents cited in  the above-mentioned European search report.
The members are as contained in the European Patent Office EDP file on
The European Patent Office is in no way liable for these particulars which are merely given for the purpose of information.

24-09-2024

| Patent document cited in search report | | Publication date | Patent family member(s) | | Publication date |
|---|---|---|---|---|---|
| US 2021324167 | A1 | 21-10-2021 | CA | 3106072 A1 | 16-01-2020 |
| | | | CN | 112399987 A | 23-02-2021 |
| | | | EP | 3820934 A1 | 19-05-2021 |
| | | | JP | 7498881 B2 | 13-06-2024 |
| | | | JP | 2021531369 A | 18-11-2021 |
| | | | KR | 20210030407 A | 17-03-2021 |
| | | | US | 2021324167 A1 | 21-10-2021 |
| | | | WO | 2020011587 A1 | 16-01-2020 |
| EP 4036306 | A1 | 03-08-2022 | EP | 4036306 A1 | 03-08-2022 |
| | | | EP | 4036307 A1 | 03-08-2022 |
| | | | EP | 4435179 A2 | 25-09-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3820957 A